# DEMANDE DE BREVET EUROPEEN

(11) **EP 1 908 627 A1**
(43) Date de publication de la demande: **09.04.2008**
(21) Numéro de dépôt: 07301333.6
(22) Date de dépôt: 30.08.2007
(51) Int. Cl.: B60N 2/30

(54) **Siège comprenant un dossier mobile entre une position déployée et une position rabattue, notamment pour automobile**

(30) Priorité: 31.08.2006 FR 0653543
(71) Demandeur: Peugeot Citroen Automobiles SA, 78140 Vélizy-Villacoublay (FR)
(72) Inventeur: Dutot, Christophe, 94400 Vitry sur Seine (FR)

(57) **Abrégé**

Siège du type comprenant un dossier (4) mobile entre une position déployée et une position rabattue, caractérisé en ce que le dossier comprend une armature de dossier (5) montée pivotante à sa base sur un support de dossier (6) par une liaison pivot (10) et un cadre support de coussin de dossier (5) monté pivotant à sa partie supérieure sur l'armature de dossier par une liaison pivot (9) et coopérant à sa partie inférieure avec le support de dossier par au moins une liaison pivot glissante (11).

## Description

La présente invention est relative à un siège du type comprenant un dossier mobile entre une position déployée et une position rabattue, et notamment un siège pour véhicule automobile.

On connaît les sièges de véhicule automobile à dossier rabattable comprenant une assise montée sur un support et un dossier porté par un cadre monté articulé à sa base sur le support des assises de façon à pouvoir faire passer le dossier d'une position déployée qui est la position d'utilisation du siège à une position rabattue vers l'avant dans lequel le dossier est en appui sur l'assise. Cette position rabattue est une position de rangement utilisée notamment pour les sièges arrière des véhicules automobiles de façon à augmenter le volume disponible du coffre.

Les sièges que l'on connaît présentent l'inconvénient d'avoir des dossiers dont les coussins ont une épaisseur relativement importante nécessaire pour obtenir un bon confort, ce qui augmente l'encombrement du dossier, en particulier lorsqu'il est en position rabattue. Il en résulte que, même en position rabattue, le dossier ne dégage pas complètement l'espace qui pourrait être dégagé si le dossier pouvait être complètement rabattu sur l'assise.

En outre, de tels dossiers nécessitent des mécanismes de verrouillage en position déployée.

Le but de la présente invention est de remédier à ces inconvénients en proposant un siège à dossier rabattable confortable ayant un encombrement faible lorsqu'il est rabattu et pouvant ne pas nécessiter de mécanisme de verrouillage/ déverrouillage.

A cet effet, l'invention a pour objet un siège du type comprenant un dossier mobile entre une position déployée et une position rabattue. Ce dossier comprend une armature de dossier montée pivotante à sa base sur un support de dossier par une liaison pivot et un cadre support de coussin de dossier monté pivotant à sa partie supérieure sur l'armature de dossier par une liaison pivot et coopérant à sa partie inférieure avec le support de dossier par au moins une liaison pivot glissante.

De préférence, la liaison pivot glissante du cadre support de coussin de dossier est disposée entre la liaison pivot de l'armature de dossier et du support de dossier d'une part, et la liaison pivot du cadre support de coussin de dossier et de l'armature de dossier d'autre part, et en avant par rapport au plan défini par les deux liaisons pivot portées par l'armature de dossier.

La liaison pivot glissante peut comprendre un pion porté par le support de dossier coulissant dans une fente prévue dans le cadre support de coussin de dossier, le pion venant en butée contre une extrémité de la fente lorsque le dossier est en position déployée et repoussé vers l'arrière.

L'armature de dossier peut être montée pivotante à sa base par l'intermédiaire d'une bielle conformée de telle sorte que, en position déployée, la base de l'armature de dossier est décalée vers l'arrière du dossier et, en position rabattue, le cadre support de coussin de dossier est effacé dans l'armature du dossier.

De préférence, une nappe de dossier est fixée sur le cadre support de coussin de dossier pour supporter un coussin de dossier.

Le siège comporte une armature d'assise et le support de dossier peut être solidaire de l'armature d'assise.

Le siège est par exemple un siège pour automobile.

L'invention va maintenant être décrite de façon plus précise mais non limitative en regard des figures annexées dans lesquelles :
- la figure 1 est une vue en perspective de l'armature d'un dossier à siège rabattable ;
- la figure 2 est une vue de profil schématique du siège de la figure 1 avec le dossier en position déployée ;
- la figure 3 est une vue de profil du siège de la figure 1 ayant le dossier en position rabattue.

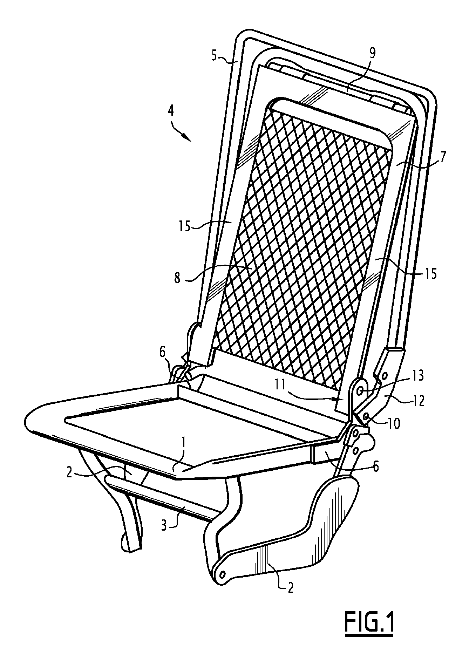

L'armature de siège, représentée à la figure 1, comporte une armature d'assise 1 destinée à recevoir un coussin d'assise non représenté sur cette figure, et reposant sur un des supports latéraux 2 et un support avant 3. L'armature de siège comporte également un mécanisme de dossier rabattable, repéré généralement par 4, constitué d'une armature de dossier 5 et d'un cadre support de dossier 7. L'armature de dossier 5 est montée articulée par sa partie inférieure sur des supports de dossier 6 situé de part et d'autre du dossier et solidaire de l'armature d'assise 1. Le cadre support de coussin de dossier 7 est monté articulé d'une part à sa partie supérieure sur l'armature de dossier 5 et d'autre part à sa partie inférieure sur les supports de dossier 6.

Le cadre de support de coussin de dossier 7 porte une nappe de dossier 8 constitué d'un filet connu en lui-même. Cette nappe de dossier est destinée à recevoir le coussin de dossier non représenté sur cette figure.

Comme on va le voir maintenant, le cadre support de coussin de dossier 7 et l'armature de dossier 5 sont articulés et conformés de telle sorte qu'en position déployée, le coussin de dossier est utilisable dans les meilleures conditions de confort pour l'utilisateur, qu'en position rabattue le coussin de dossier est effacé et prend le minimum de place au-dessus de l'assise et que la position déployée est naturellement stable sans qu'un mécanisme de verrouillage soit nécessaire.

Pour obtenir le résultat qui vient d'être indiqué, le cadre support de coussin de dossier 7 est monté articulé à sa partie supérieure par une articulation pivotante 9 horizontale fixée à la partie supérieure de l'armature de dossier 5. L'armature de dossier 5 est montée pivotante par des articulations de pivot 10 (une seule est visible sur la figure) sur les deux supports latéraux de dossier 6. Le cadre support de coussin de dossier 7 est monté articulé à sa partie inférieure sur les supports de dossier 6 par des liaisons pivot glissantes 11 (une seule est visible sur la figure) disposées entre la liaison pivot 9 de la partie supérieure du cadre support de coussin de dossier 7, et les liaisons pivot inférieures 10 de l'armature de dossier 5.

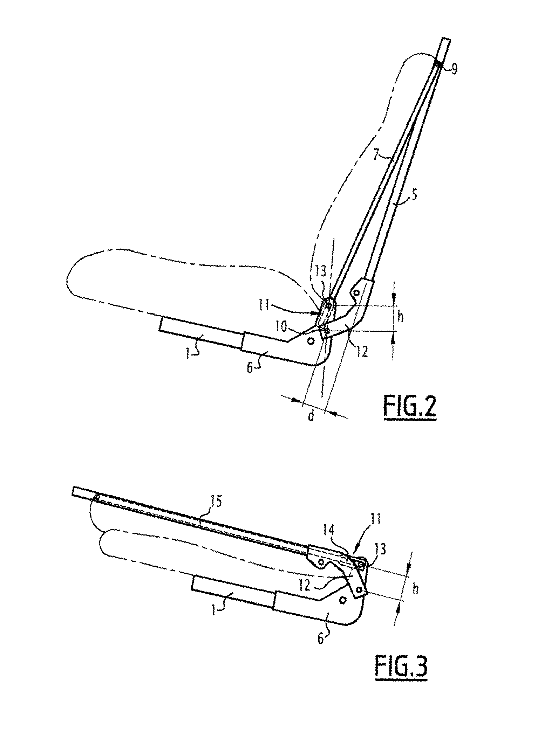

Les liaisons pivot 10 de l'armature de dossier sont portées par des bielles 12 prévues (une seule est visible sur la figure) dans la partie inférieure de l'armature de dossier et qui ont une forme arquée de telle sorte que, en position déployée, la base de l'armature du dossier est disposée en arrière par rapport au cadre support du coussin de dossier, et en position rabattue, le cadre support de dossier et l'armature de dossier sont sensiblement dans le même plan. Cette disposition permet un bon effacement du dossier, comme cela est visible sur les figures 2 et 3. A la figure 2, le dossier est en position déployée et la base de l'armature du dossier est reculée par rapport au cadre de support de coussin de dossier, alors qu'à la figure 3, qui représente le dossier rabattu, le cadre support de dossier est complètement effacé dans l'armature du dossier.

Cette structure permet d'utiliser des coussins de dossier relativement minces qui sont malgré tout confortable car en appui sur la nappe 8, qui ont une inclinaison adaptée pour être agréable pour l'utilisateur, et qui prennent peu de place lorsqu'ils sont rabattus.

Pour permettre ce basculement du dossier, il est nécessaire que la liaison 11 de la partie inférieure du cadre du support de coussin de dossier avec le support de dossier soit une liaison à pivot glissante.

En effet, le pivot 13 de cette liaison étant situé entre le pivot inférieur et le pivot supérieur de l'armature de dossier, lorsque l'on rabat le dossier le centre de rotation du cadre de support de coussin de dossier n'est pas le même que le centre de rotation de l'armature de dossier. Du fait de la liaison pivotante sans glissement de la partie supérieure du cadre support de coussin de dossier 7 et de l'armature de dossier 5, il est nécessaire que la liaison inférieure du cadre support de coussin de dossier puisse glisser de façon à compenser des différences de rayons de courbure.

Pour assurer cette liaison glissante, comme cela se voit à la figure 2 ou à la figure 3, la liaison pivotante glissante 11 est constituée d'un pion 13 porté par le support de dossier 6 qui coopère avec une fente 14 prévue à la partie inférieure du montant latéral 15 du cadre support de dossier dans le prolongement de ce montant latéral, dans laquelle il peut glisser. La fente, de longueur limitée, est prévue de telle sorte qu'en position déployée, le pion 13 vient en butée contre une extrémité de la fente.

Le pion 13 de la liaison pivotante glissante 11 de la partie inférieure du cadre support de coussin de dossier 7 avec le support de dossier 6, est décalé vers l'avant par rapport au plan qui est défini par d'une part l'articulation de la liaison pivot 9 de la partie supérieure du cadre de support de coussin de dossier 7 et de l'armature de dossier 5, et d'autre part la liaison pivot 10 de la partie inférieure de l'armature de dossier 5 et le support de dossier 6. Compte tenu de la disposition relative des différents pivots, lorsque le dossier est rabattu vers l'avant, depuis la position déployée, la distance entre le pivot supérieur 9 et le pion 13 augmente et le mouvement relatif du pion et de la fente est rendu possible par le glissement du pion dans la fente. Inversement lorsque le dossier est en position déployée, un mouvement du dossier vers l'arrière est impossible car un tel mouvement nécessiterait un glissement du pion dans la fente en sens inverse, ce qui est impossible du fait de la butée.

Cette disposition à l'avantage de faire en sorte que lorsque le dossier est en position déployée il est bloqué dans cette position sans qu'il y ait besoin de mettre en place de moyens de verrouillage particulier.

Par ailleurs, le décalage en hauteur h entre la liaison pivot 10 de la partie inférieure de l'armature de dossier 5 avec le support de dossier 6 d'une part, et le pion 13 de la liaison pivot glissante 11 de la partie inférieure du cadre support de coussin de dossier 7 avec le support de dossier 6 d'autre part, est égal au décalage horizontal d entre le pion 10 de l'articulation pivot de l'armature de dossier 5 avec le support de dossier 6 d'une part, et le plan général du cadre de l'armature de dossier 9 d'autre part. Du fait de l'égalité des deux décalages qui viennent d'être indiqués, lorsque le dossier est en position rabattue, comme cela est représenté à la figure 3, le cadre support de coussin de dossier 5 est complètement contenu à l'intérieur de l'armature de dossier 9 qui, ainsi, est parfaitement effacé.

On obtient ainsi une surface plane commode pour l'utilisation comme un fond de coffre agrandi.

Un tel siège, qui est par exemple un siège arrière de véhicule automobile, est monté sur les supports latéraux et des supports avant qui permettent de fixer le siège sur le fond de la caisse du véhicule automobile et qui permettent, éventuellement, de rabattre l'assise du véhicule vers l'avant.

La structure de dossier telle qu'elle vient d'être décrite peut être adaptée à tous types de sièges à dossier rabattable et l'homme du métier saura les adapter au cas par cas.

## Revendications

1. Siège du type comprenant un dossier (4) mobile entre une position déployée et une position rabattue, **caractérisé en ce que** le dossier comprend une armature de dossier (5) montée pivotante à sa base sur un support de dossier (6) par une liaison pivot (10) et un cadre support de coussin de dossier (5) monté pivotant à sa partie supérieure sur l'armature de dossier par une liaison pivot (9) et coopérant à sa partie inférieure avec le support de dossier par au moins une liaison pivot glissante (11).

2. Siège selon la revendication 1, **caractérisé en ce que** la liaison pivot glissante (11) du cadre support de coussin de dossier (7) est disposée entre la liaison pivot (10) de l'armature de dossier (5) et du support de dossier (6) d'une part, et la liaison pivot (9) du cadre support de coussin de dossier (7) et de l'armature de dossier (5) d'autre part, et en avant par rapport au plan défini par les deux liaisons pivot (9, 10) portées par l'armature de dossier (5).

3. Siège selon la revendication 2, **caractérisé en ce que** la liaison pivot glissante comprend un pion porté (13) par le support de dossier (6) coulissant dans une fente (14) prévue dans le cadre support de coussin de dossier, le pion venant en butée contre une extrémité de la fente (14) lorsque le dossier est en position déployée et repoussé vers l'arrière.

4. Siège selon la revendication 2 ou la revendication 3, **caractérisé en ce que en ce que** l'armature de dossier (5) est montée pivotante à sa base par l'intermédiaire d'une bielle (12) conformée de telle sorte que, en position déployée, la base de l'armature de dossier est décalée vers l'arrière du dossier et, en position rabattue, le cadre support de coussin de dossier est effacé dans l'armature du dossier.

5. Siège selon l'une quelconque des revendications 1 à 4, **caractérisé en ce que** une nappe de dossier (8) est fixée sur le cadre support de coussin de dossier (7) pour supporter un coussin de dossier.

6. Siège selon l'une quelconque des revendications 1 à 5, **caractérisé en ce que** le siège comporte une armature d'assise (1) et **en ce que** les supports de dossier (6) sont solidaires de l'armature d'assise.

7. Siège selon l'une quelconque des revendications 1 à 6, **caractérisé en ce qu'**il s'agit d'un siège pour automobile.
